# EUROPEAN PATENT SPECIFICATION

(11) **EP 4 280 365 B1**
(45) Date of publication and mention of the grant of the patent: **04.03.2026**
(21) Application number: 22888883.0
(22) Date of filing: 06.07.2022
(51) Int. Cl.: H01M 50/30, H01M 50/24, H01M 50/244, H01M 50/251

(54) **DIRECTIONAL EXHAUST DEVICE, BATTERY, AND ENERGY STORAGE PREFABRICATED COMPARTMENT**
GERICHTETE ABGASVORRICHTUNG, BATTERIE UND VORGEFERTIGTES ENERGIESPEICHERFACH
DISPOSITIF D'ÉCHAPPEMENT DIRECTIONNEL, BATTERIE ET COMPARTIMENT PRÉFABRIQUÉ DE STOCKAGE D'ÉNERGIE

(30) Priority: 05.11.2021 CN 202122695707 U
(43) Date of publication of application: 22.11.2023
(73) Proprietor: Contemporary Amperex Technology (Hong Kong) Limited, Central, Central And Western District (HK)
(72) Inventor: LIU, Yue, Ningde, Fujian 352100 (CN); WANG, Zengzhong, Ningde, Fujian 352100 (CN); ZHENG, Chenling, Ningde, Fujian 352100 (CN)
(74) Representative: Rowlands, Stuart Michael
(86) International application number: PCT/CN2022/104010
(87) International publication number: WO 2023/077848

(56) References cited:
- CN-A- 110 299 486
- CN-A- 112 335 097
- CN-U- 214 232 472
- CN-U- 216 488 385
- DE-A1- 102013 216 071
- JP-A- 2010 061 988
- JP-A- 2016 062 757
- JP-A- 2016 062 757

## Description

### TECHNICAL FIELD

The present application relates to the technical field of energy storage equipment, and in particular, to a directional exhaust device, a battery, and an energy storage prefabricated container.

### BACKGROUND

Building a new power system with new energy sources as the main energy source is an important measure to achieving carbon emission peak and carbon neutrality, and energy storage containers play an important role in the new power system. Batteries are the main form of electrochemical energy storage. At the same time, energy storage containers have become the main product form of battery energy storage power stations as they are highly integrated and convenient to install.

Batteries placed in an energy storage container are prone to experiencing a collapse of the battery separator and internal short circuit due to internal and external factors such as overcharge and over-discharge, overheating, mechanical collision, etc., thereby leading to the occurrence of thermal runaway. When thermal runaway occurs, the battery will produce a large amount of flammable gas, which can easily cause deflagration and explosion, affecting the safety of the energy storage container and causing great damage.

### SUMMARY

In view of the above, the present application provides a directional exhaust device, a battery, and an energy storage prefabricated container, which can improve the safety and service life of the prefabricated energy storage container. The invention is defined by the appended claims. In the following, apparatus and/or methods referred to as embodiments that nevertheless do not fall within the scope of the claims should be understood as examples useful for understanding the invention.

In a first aspect, the present application provides a directional exhaust device. The directional exhaust device includes at least a first exhaust part and a second exhaust part, the first exhaust part is configured to communicate with a pressure releasing device of a battery, and the second exhaust part communicates with the first exhaust part and an external environment, so that a gas generated by the battery is discharged through the pressure releasing device, the first exhaust part, and the second exhaust part. A large amount of combustible gas generated by the battery during thermal runaway enters the first exhaust part through the pressure releasing device, and is directly discharged to the external environment through the first exhaust part and the second exhaust part, so that the combustible gas discharged from the pressure releasing device is prevented from entering the battery compartment, thereby preventing the deflagration and explosion caused by the high concentration of the combustible gas in the battery compartment, and improving the safety and service life of the energy storage prefabricated container.

In some embodiments, the first exhaust part is provided with a first installation part extending away from the first exhaust part along a radial direction of the first exhaust part; the first installation part is pressed against the second exhaust part. The first installation part and the second exhaust part are in surface contact, which increases the contact area between the first installation part and the second exhaust part, thereby improving the cooperation reliability between the first installation part and the second exhaust part, and reducing the installation accuracy required for installation and the difficulty of installation. The first installation part is pressed against the second exhaust part so that the combustible gas discharged to the external environment through the first exhaust part and the second exhaust part will not enter the battery compartment from the position where the first installation part and the second exhaust part are connected, thus preventing the deflagration and explosion of the battery compartment caused by combustible gas.

In some embodiments, the first installation part and the second exhaust part are in a seal connection through a first sealing member, which further prevents the combustible gas discharged to the external environment through the first exhaust part and the second exhaust part from entering the battery compartment through the position where the first installation part and the second exhaust part are connected and causing deflagration and the explosion of the battery compartment, so that the reliability and safety of the directional exhaust device are improved.

In some embodiments, the first sealing member is a soft rubber or a gasket. Both the soft rubber and the gasket show good sealing performance, and the soft rubber or the gasket can be selected as the first sealing member according to the actual situation when installing the directional exhaust device.

In some embodiments, the directional exhaust device further includes a second installation part connected to the second exhaust part; the first exhaust part is sleeved on an inner wall or an outer wall of the second installation part. The second installation part can increase a length of the directional exhaust device, so that the directional exhaust device may be applied to a situation where the distance between the battery cartridge and the external environment is relatively long, thus the usage scenarios of the directional exhaust device are increased. At the same time, the first exhaust part sleeved on the inner wall or outer wall of the second installation part leads to an increase in a contact area between the second installation part and the first exhaust part, thus it is difficult for the combustible gas flowing through the first exhaust part and the second exhaust part to leak from the position where the second installation part and the first exhaust part are connected, so that the sealing effect of the directional exhaust device is improved.

In some embodiments, the first exhaust part and the second installation part are in a seal connection through a second sealing member. The second seal is capable of sealing the part where the first exhaust part and the second installation part are connected, which prevents the combustible gas discharged to the external environment through the first exhaust part, the second installation part, and the second exhaust part from entering the battery compartment through the position where the first exhaust part and the second installation part are connected and causing deflagration and explosion of the battery compartment, so that the reliability and safety of the directional exhaust device are improved.

In some embodiments, a first contact surface close to the pressure releasing device and a second contact surface away from the pressure releasing device are provided between the first exhaust part and the second installation part, and the second sealing member is located on the first contact surface and/or the second contact surface. The second sealing member may be placed at different positions in different situations, and it is not necessary to place the second sealing member at a specific position during assembly, which lowers the installation difficulty of the second sealing member and simplifies the installation of the directional exhaust device, while ensuring the sealing reliability between the first exhaust part and the second installation part.

In some embodiments, the second exhaust part is detachably connected with the second installation part, or the second exhaust part and the second installation part form an integral structure. With the second exhaust part detachably connected with the second installation part, when the second installation part or the second exhaust part is damaged, only the damaged part is required to be replaced without replacing the entire directional exhaust device, thereby reducing maintenance costs. At the same time, with the detachable connection between the second installation part and the second exhaust part, the second installation part and the second exhaust part are able to be transported separately during transportation, thereby reducing transportation costs. The integral structure of the second installation part and the second exhaust part does not require installation between the second installation part and the second exhaust part, thereby simplifying the installation process of the directional exhaust device. At the same time, the integral structure of the second installation part and the second exhaust part does not require sealing in the connecting area between the second installation part and the second exhaust part, which simplifies the structure of the directional exhaust device.

In some embodiments, the first exhaust part and the second exhaust part are bent relative to each other. The relative bending extent and a bending angle of the first exhaust part and the second exhaust part of the directional exhaust device can be adjusted according to different installation environments, so that the directional exhaust device can be applied to various environments.

In some embodiments, the first exhaust part is configured for a plugging connection with the pressure releasing device. The first exhaust part is plugged with the pressure releasing device so that the gas discharged from the battery through the pressure releasing device directly enters the first exhaust part, thus the combustible gas will not enter the battery compartment to cause deflagration and explosion. At the same time, the plugging structure of the first exhaust part and the pressure releasing device is relatively simple, which is convenient for installation.

In a second aspect, the present application provides a battery, which includes a battery cell, a pressure releasing device, and the above-mentioned directional exhaust device. The battery cell is accommodated in a container. The container is used to provide accommodation space for the battery cell, and the container may adopt various structures. The cooperation between the pressure releasing device of the battery and the directional exhaust device can discharge the combustible gas generated by the battery in case of thermal runaway to an external environment, which prevents the combustible gas from entering the battery compartment and causing deflagration and explosion.

In a third aspect, the present application provides an energy storage prefabricated container, which includes a battery compartment and the above-mentioned battery. The battery compartment can accommodate the battery thereby realizing the function of storing energy in the energy storage prefabricated container.

In some embodiments, a partitioning board is arranged in the energy storage prefabricated container, the partitioning board is configured for dividing the energy storage prefabricated container into a plurality of compartments, an inner cavity of the partitioning board communicates with an external environment, and the partitioning board is served as the second exhaust part. The energy storage prefabricated container may be divided into a plurality of compartments through the partitioning board. A compartment for storing the battery is the battery compartment, in addition, an electrical equipment compartment, a water-cooling unit compartment, and the like are also provided, so that each compartment can cooperate with each other to realize the normal operation of the energy storage prefabricated container. The partitioning board may be used as the second exhaust part, and the partitioning board may be in communication with the external environment, so that the combustible gas generated by the battery in the case of thermal runaway can be discharged to the external environment through the second exhaust part. By configuring the partitioning board as the second exhaust part, the partitioning board can not only be used to divide each compartment, but also can be used to discharge the combustible gas generated by the battery during the thermal runaway, that is, the partitioning board is multifunctional, therefore, there is no need to arrange an additional second exhaust part in the energy storage prefabricated container, which can simplify the structure of the energy storage prefabricated container, and reduce the production cost of the energy storage prefabricated container.

The above-mentioned description is merely the summary of the technical proposals of the present application, in order to more clearly understand the technical means of the present application, but can be implemented according to the content of the description, and in order to allow the above-mentioned and other purposes, features and advantages of the present application to be clearer and easier to understand, the specific implementations of the present application are exemplified below.

### BRIEF DESCRIPTION OF THE DRAWINGS

In order to illustrate the technical proposals of the embodiments of the application more clearly, the accompanying drawings to be used in the embodiments of the present application will be briefly introduced below. It will be apparent that the accompanying drawings described below are only some implementations of the application, those of ordinary skill in the art can also obtain other drawings based on the accompanying drawings without making creative efforts.
FIG. 1 is an exploded view of the battery according to a specific embodiment of the present application;
FIG. 2 is a partial structural view of the directional exhaust device and the battery according to a first specific embodiment of the present application, in which the pressure releasing device of the battery is in a closed state;
FIG. 3 is a partial structural view of the directional exhaust device and the battery according to the first specific embodiment of the present application, in which the pressure releasing device of the battery is in an open state;
FIG. 4 is a partial structural view of the directional exhaust device and the battery according to a second specific embodiment of the present application;
FIG. 5 is a partial structural view of the directional exhaust device and the battery according to a third specific embodiment of the present application;
FIG. 6 is a partial structural view of the directional exhaust device and the battery according to a fourth specific embodiment of the present application; and
FIG. 7 is a partial structural view of the directional exhaust device and the battery according to a fifth specific embodiment of the present application.
100, battery; 10, cartridge body; 11, first part; 12, second part; 20, battery cell; 30, pressure releasing device; 200, first exhaust part; 201, first installation part; 300, second exhaust part; 301, second installation part; 400, first sealing member; 500, second sealing member; 600, first contact surface; and 700, second contact surface.

### DETAILED DESCRIPTION OF THE EMBODIMENTS

The embodiments of the technical proposals of the present application will be described in detail below in conjunction with the accompanying drawings. The following examples are only used to illustrate the technical proposals of the present application more clearly, and therefore are only exemplary examples, rather than limiting the protection scope of the present application.

Unless otherwise defined, all technical and scientific terms used herein are the same as the meaning commonly understood by those skilled in the art of the present application; the terms used herein are only to describe the purpose of specific embodiments, and are not intended to limit the present application; the terms "comprising" and "having" and any variations thereof in the description and claims of the present application and the description of the above drawings are intended to cover a non-exclusive inclusion.

In the description of the embodiments of the present application, the technical terms "first" and "second" are only used to distinguish different objects, and cannot be understood as indicating or implying relative importance or implicitly indicating a quantity, a specific order, or a primary-secondary relationship of the indicated technical features. In the description of the embodiments of the present application, "a plurality of" means two or more, unless otherwise specifically defined.

The term "an embodiment" herein means that a particular feature, structure, or characteristic described in connection with the embodiment may be included in at least one embodiment of the present application. The occurrences of this phrase in various places in the specification are not necessarily all referring to the same embodiment, nor are separate or alternative embodiments mutually exclusive of other embodiments. It is understood explicitly and implicitly by those skilled in the art that the embodiments described herein can be combined with other embodiments.

In the description of the embodiment of the present application, the term "and/or" is only an association relationship describing associated objects, which means that there can be three kinds of relationships, for example, A and/or B can represent: three situations where A exists alone, A and B exist at the same time, and B exists alone. In addition, the character "/" used herein generally indicates that the contextual objects are an "or" relationship.

In the description of the embodiment of the present application, term "a plurality of" refers to more than two (including two), likewise, "a plurality of groups" refers to more than two groups (including two groups), "a plurality of pieces" refers to two or more pieces (including two pieces).

In the description of the embodiment of the present application, the orientation or positional relationship indicated by the technical terms "center", "longitudinal", "lateral", "lengthwise", "widthwise", "thickness", "upper", "lower", "front", "rear", "left", "right", "vertical", "horizontal", "top", "bottom", "inner", "outer", "clockwise", "counterclockwise", "axial", "radial" and "circumferential" are based on the orientation or positional relationship shown in the drawings, and are only for the convenience of describing the embodiments of the present application and simplifying the description, and do not indicate or imply that the referred device or element must have a specific orientation, be constructed and operated in a specific orientation, and therefore cannot be understood as limitations on the embodiments of this application.

In the description of the embodiments of the present application, unless otherwise clearly specified and limited, technical terms such as "install", "connect", "connection" and "fix" should be understood in a broad sense, for example, it may be a fixed connection, or It may be a detachable connection or integrated; it may also be a mechanical connection or an electrical connection; it may be directly connected or indirectly connected through an intermediary, and it may be the internal communication of two components or the interaction relation of two components. Those of ordinary skill in the art can understand the specific meanings of the above terms in the embodiments of the present application according to specific situations.

Building a new power system with new energy sources as the main source is an important measure to achieve the carbon emission peak and carbon neutrality, and energy storage plays an important role in the new power system. At present, the scale of new energy storage equipment in China is soaring, and batteries have become the main form of electrochemical energy storage. At the same time, energy storage prefabricated containers have become the main product form of battery energy storage stations due to their high integration and convenient installation.

The applicant has noticed that the action of internal and external factors such as overcharge and over-discharge, overheating, and mechanical collision easily causes the breakdown of the battery separator and internal short circuit, thereby leading to the occurrence of thermal runaway. After thermal runaway occurs, the battery will generate a large amount of combustible gas, which may cause deflagration and explosion after being directly discharged into the battery compartment. As far as the current traditional safety fire protection measures are concerned, the thermal runaway of the battery cannot be effectively suppressed, which leads to the rapid spread of the initial fire, and then leads to a large-scale fire, causing great danger and significant losses.

In order to alleviate the problem of fire caused by thermal runaway of the batteries, the applicant found that, by discharging the combustible gas generated by the battery to an external environment, it can prevent the combustible gas from staying and accumulating in the battery compartment to cause deflagration and explosion. In the present application, the combustible gas generated by a battery in the energy storage prefabricated container is discharged to the external environment through a directional exhaust device.

The directional exhaust device disclosed in the embodiments of the present application may be used, but not limited to, for directional discharge of combustible gases generated by batteries in an energy storage prefabricated container, and may also be used for directional discharge of gases in other scenarios. The energy storage prefabricated container includes a battery compartment and a battery, and the battery compartment is capable of accommodating the battery, thereby realizing the function of storing energy in the energy storage prefabricated container.

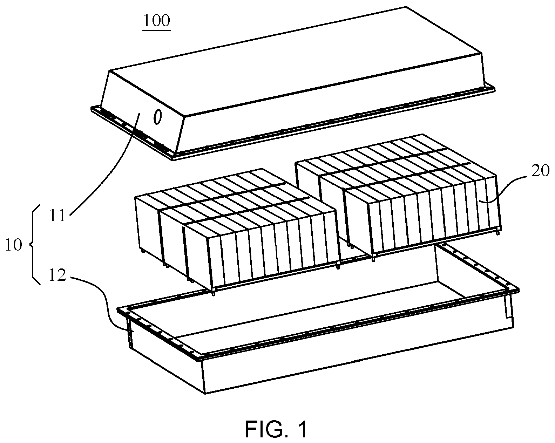

Referring to FIG. 1, which is an exploded view of the battery provided by a specific embodiment of the present application. The embodiment of the present application provides a battery 100, which includes a battery cell 20, a pressure releasing device 30, and a directional exhaust device.

In the present embodiment, the battery cell 20 is accommodated in a cartridge 10. The cartridge body 10 is configured for providing an accommodation space for accommodating the battery cell 20, and the cartridge body 10 may adopt various structures. In some embodiments, the cartridge body 10 may include a first part 11 and a second part 12, the first part 11 and the second part 12 cover each other, and the first part 11 and the second part 12 together define an accommodation space for accommodating the battery cell 20. The second part 12 may have a hollow structure with one end having an opening, the first part 11 may have a plate-shaped structure, and the first part 11 covers the opening side of the second part 12, so that the first part 11 and the second part 12 together define an accommodation space. The first part 11 and the second part 12 may both have a hollow structure with one side having an opening, and the opening side of the first part 11 is covered by the opening side of the second part 12. It will be apparent that the cartridge body 10 formed by the first part 11 and the second part 12 may be of various shapes, such as a cylinder, a cuboid, and the like.

In the battery 100, a plurality of battery cells 20 may be provided, and the plurality of battery cells 20 may be connected in series or parallel, or a combination connection. The combination connection refers to a plurality of battery cells 20 that are both connected in series and in parallel. A plurality of battery cells 20 may be directly connected in series, in parallel, or in the combination connection, and then the plurality of battery cells 20 as a unity are accommodated in the cartridge body 10; of course, the battery 100 may also have a plurality of battery cells 20 connected in series or parallel, or in a combination connection to form a battery module, and then a plurality of battery modules are connected in series, parallel or in a combination connection to form a unity, and are accommodated in the cartridge body 10. The battery 100 may also include other structures, for example, the battery 100 may also include a bus component for realizing electrical connection between the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be in the form of a cylinder, a flat shape, a cuboid, or other shapes.

In addition, by cooperation between the pressure releasing device 30 and the directional exhaust device of the battery 100, the combustible gas generated by the battery 100 can be discharged to the external environment on the occurrence of thermal runaway, thereby preventing the combustible gas from entering the battery compartment and causing deflagration and explosion.

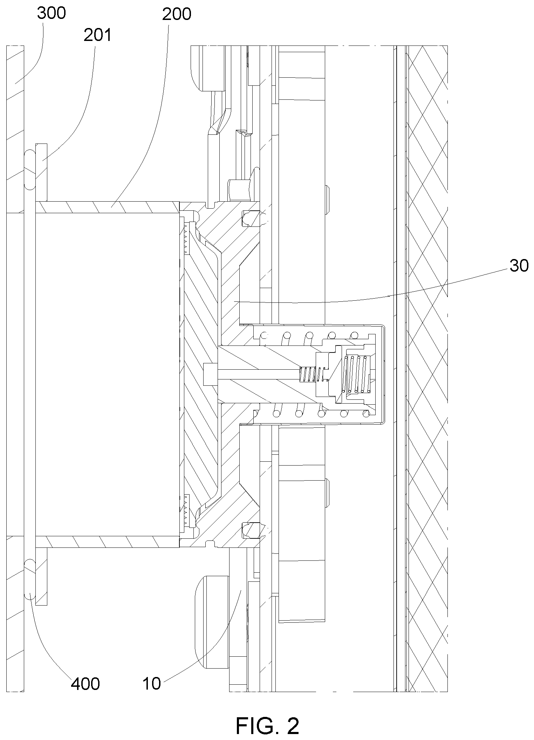

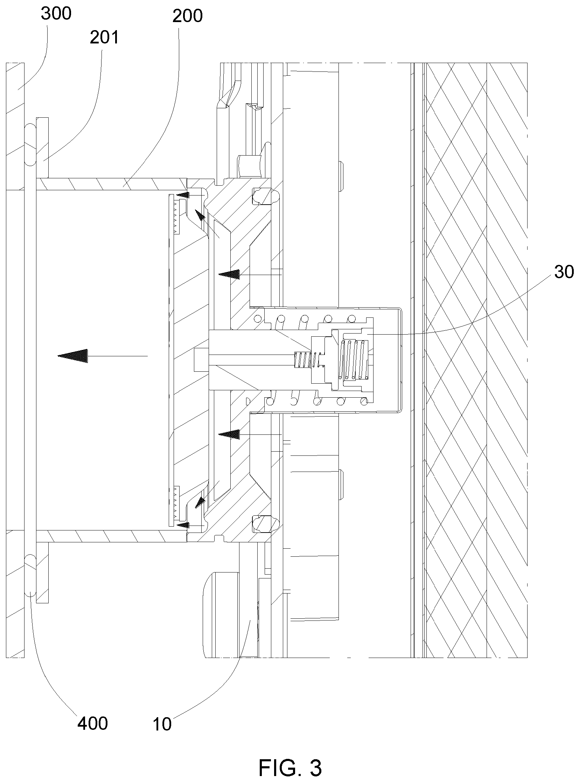

FIGS. 2 and 3 are the partial structural view of the directional exhaust device and the battery according to a first specific embodiment of the present application, in which the pressure releasing device 30 of the battery 100 is in a closed state in FIG. 2, and the pressure releasing device 30 of the battery 100 is in an open state in FIG. 3 (the arrows in FIG. 3 indicate the gas flow direction). The directional exhaust device includes at least a first exhaust part 200 and a second exhaust part 300, the first exhaust part 200 is configured for communication with the pressure releasing device 30 of the battery 100, the second exhaust part 300 is communicated with the first exhaust part 200 and the external environment, so as to discharge the gas generated by the battery 100 through the pressure releasing device 30, the first exhaust part 200, and the second exhaust part 300.

The pressure releasing device 30 may be an explosion-proof valve, which is a pressure relief mechanism capable of releasing an internal pressure of the battery 100 when the internal pressure or temperature of the battery 100 reaches a threshold value, and is generally installed on the cartridge body 10 of the battery 100. For example, as shown in FIG. 2, when the battery 100 operates normally, a gas pressure inside the battery 100 is lower than the pressure value for switching on the explosion-proof valve, so that the explosion-proof valve is in a closed state, and the gas inside the battery 100 does not communicate with external gas; as shown in FIG. 3, when the battery 100 undergoes thermal runaway under the action of internal and external factors such as overcharge, over-discharge, overheating, and mechanical collision, a large amount of combustible gas will be generated inside the battery 100, causing the gas pressure inside the battery 100 to be greater than the pressure value for switching on the explosion-proof valve, so that the explosion-proof valve changes from the closed state to the open state, thus the combustible gas inside the battery 100 can be discharged through the explosion-proof valve, thereby preventing a large amount of combustible gas from accumulating inside the battery 100 and causing the battery 100 to cause deflagration and explosion.

In this embodiment, the first exhaust part 200 and the second exhaust part 300 form a directional exhaust channel that can communicate the external environment with the pressure releasing device 30, so that gas can flow in the directional exhaust channel. A large amount of combustible gas generated by the battery 100 during thermal runaway causes the gas pressure inside the battery 100 to be greater than the pressure value for switching on the pressure releasing device 30, the pressure releasing device 30 is opened, so that the combustible gas enters the first exhaust part 200 in communication with the pressure releasing device 30 through the pressure releasing device 30, and is directly discharged to the external environment through the first exhaust part 200 and the second exhaust part 300, which prevents the combustible gas discharged from the pressure releasing device 30 from entering the battery compartment, thereby preventing the deflagration and explosion caused by the high concentration of the combustible gas in the battery compartment, and improving the safety and service life of the energy storage prefabricated container.

In addition, a safety compartment may also be arranged between the first exhaust part 200 and the external environment to temporarily accommodate the combustible gas, and an apparatus for accelerating the gas flow, such as a fan, etc., is arranged in the safety compartment to accelerate the discharge of the combustible gas, so that the combustible gases can be rapidly vented to the external environment.

In one embodiment, as shown in FIG. 2, the first exhaust part 200 is provided with a first installation part 201, and the first installation part 201 extends away from the first exhaust part along a radial direction of the first exhaust part 200; the first installation part 201 is pressed against the second exhaust part 300.

In this embodiment, the first installation part 201 is in surface contact with the second exhaust part 300, and the first installation part 201 extending away from the first exhaust part 200 along the radial direction of the first exhaust part 200 increases a contact area between the first installation part 201 and the second exhaust part 300, thereby improving the cooperation reliability between the first installation part 201 and the second exhaust part 300, reducing the accuracy required for installation and the Installation difficulty. The first installation part 201 is pressed against the second exhaust part 300 so that the combustible gas discharged to the external environment through the first exhaust part 200 and the second exhaust part 300 will not enter the battery compartment from the position where the first installation part 201 connects with the second exhaust part 300. The connected position enters the battery compartment, thereby preventing the deflagration and explosion of the battery compartment caused by the combustible gas.

In addition, since the directional exhaust device and the installation side of the cartridge body 10 of the battery 100 are often invisible when installing the battery 100 into the battery compartment, the surface contact between the first installation part 201 and the second exhaust part 300 allows the operator to install the first installation part 201 and the second exhaust part 300 successfully by moving the battery 100 only, thereby realizing the quick plugging and blind insertion of the directional exhaust device during installation, so that directional exhaust can be installed more quickly. At the same time, after moving the battery 100 so that the first installation part 201 and the second exhaust part 300 are located in a suitable installation position, the first installation part 201 and the second exhaust part 300 can be connected by means of bolt connection or the like, so that the battery 100 is not movable relative to the energy storage prefabricated container, and the position of the directional exhaust device is fixed to ensure that the directional exhaust device can operate normally.

In one embodiment, as shown in FIG. 2, the first installation part 201 and the second exhaust part 300 are in a seal connection through a first sealing member 400.

In this embodiment, the first sealing member 400 seals the part where the first installation part 201 and the second exhaust part 300 are connected, which further prevents the combustible gas discharged through the first exhaust part 200 and the second exhaust part 300 from leaking into the battery compartment through the connection part between the first installation part 201 and the second exhaust part 300, and causing deflagration and explosion of the battery compartment, thereby improving the reliability and safety of the directional exhaust device.

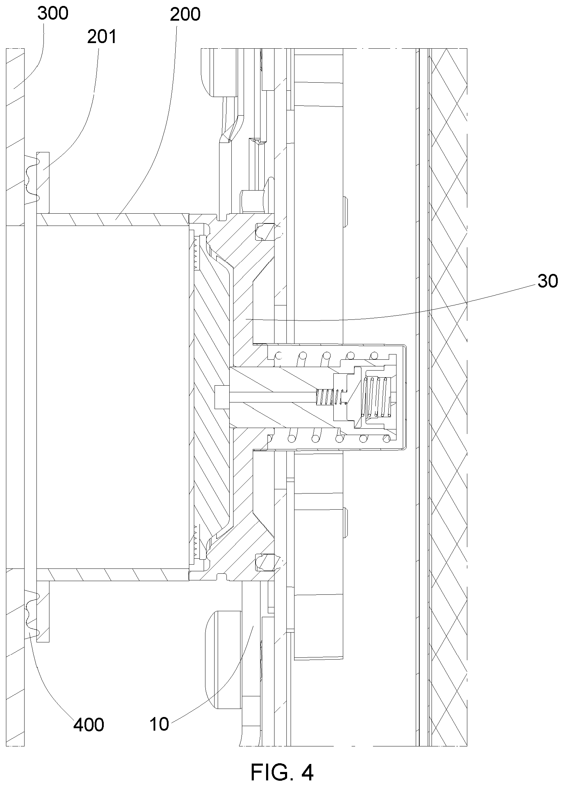

FIG. 4 is a partial structural view of a directional exhaust device and a battery according to a second specific embodiment of the present application. Referring to FIG. 2 and FIG. 4, the first sealing member 400 is a soft rubber or a gasket. The first sealing member 400 in FIG. 2 is a soft rubber, and the first sealing member 400 in FIG. 4 is a gasket.

In this embodiment, the soft rubber, and the gasket both have good sealing performance, and the soft rubber or the gasket can be selected as the first sealing member 400 according to the actual situation when installing the directional exhaust device.

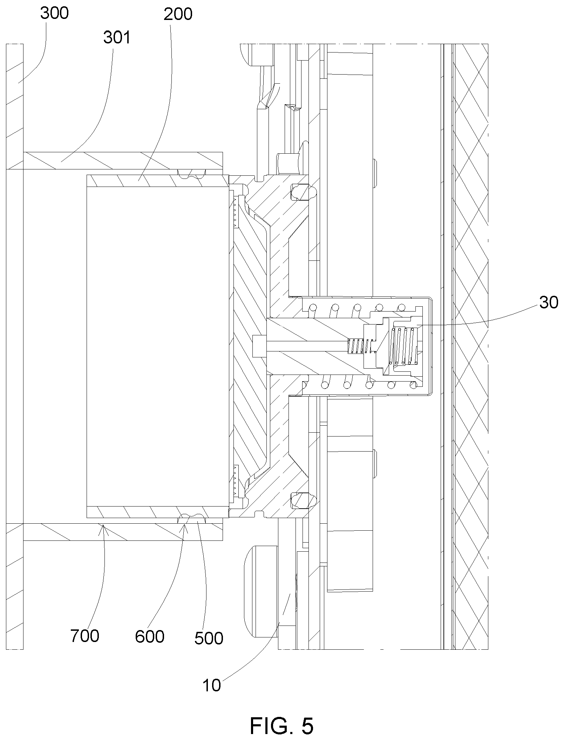

FIG. 5 is a partial structural view of the directional exhaust device and the battery according to a third specific embodiment of the present application. Referring to FIG. 5, the directional exhaust device further includes a second installation part 301 connected to the second exhaust part 300, and the first exhaust part 200 is sleeved on an inner wall or an outer wall of the second installation part 301.

In this embodiment, the second installation part 301 can increase the length of the directional exhaust device, so that the directional exhaust device can be applied in circumstances where the distance between the cartridge body 10 of the battery 100 and the external environment is relatively long, increasing the usage scenario of the directional exhaust device. At the same time, the first exhaust part 200 is sleeved on the inner wall or outer wall of the second installation part 301 so that the contact area between the second installation part 301 and the first exhaust part 200 becomes larger, and the combustible gas flowing through the first exhaust part 200 and the second exhaust part 300 is difficult to leak through the connection part between the second installation part 301 and the first exhaust part 200, thereby improving the sealing performance of the directional exhaust device.

In addition, since the directional exhaust device and the installation side of the cartridge body 10 of the battery 100 are often invisible when installing the battery 100 into the battery compartment, thus the sleeve connection between the first exhaust part 200 and the second installation part 301 allows the operator to install the first exhaust part 200 and the second installation part 301 successfully by moving the battery 100 only, thereby realizing a fast plugging and blind insertion of the directional exhaust device during installation, and the directional exhaust can be installed more quickly.

In this embodiment, as shown in FIG 5, when the second installation part 301 is provided, the first exhaust part 200 and the second exhaust part 300 may not be in direct contact, here, the inner cavity of the second installation part 301 can also be used as an exhaust channel, that is, the gas generated by thermal runaway of the battery can be discharged to the external environment through the first exhaust part 200, the inner cavity of the second installation part 301, and the second exhaust part 300.

In one embodiment, as shown in FIG. 5, the first exhaust part 200 and the second installation part 301 are in a seal connection through a second sealing member 500.

In this embodiment, the second sealing member 500 may specifically be a gasket, adhesive glue, or the like. The second sealing member 500 seals the part where the first exhaust part 200 and the second installation part 301 are connected, which prevents the combustible gas flowing to the external environment through the first exhaust part 200, the second installation part 301, and the second exhaust part 300 from leaking into the battery compartment through the connection part between the first exhaust part 200 and the second installation part 301, and causing deflagration and explosion of the battery compartment, thus the reliability and safety of the directional exhaust device can be improved.

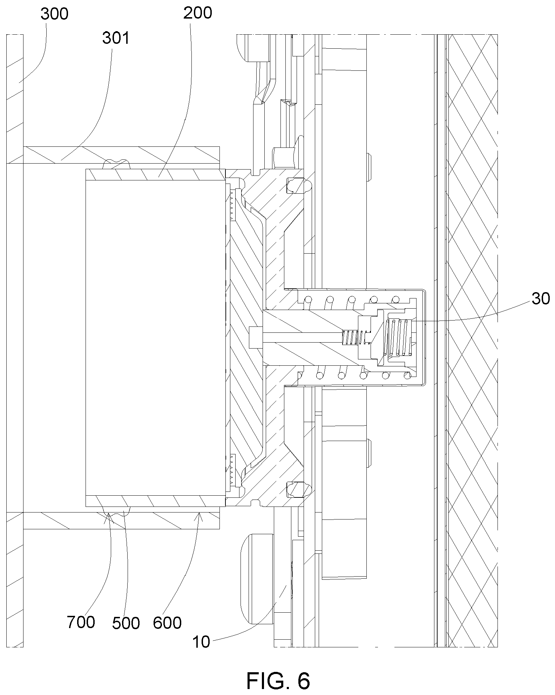

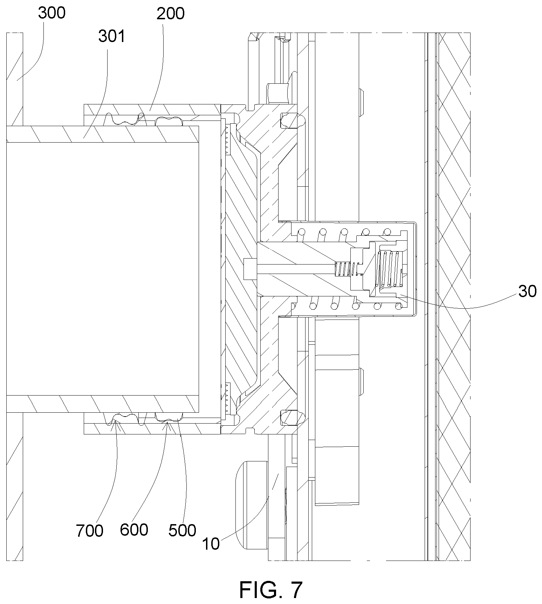

FIG. 6 is a partial structural view of the directional exhaust device and the battery according to a fourth specific embodiment of the present application. FIG. 7 is a partial structural view of the directional exhaust device and the battery according to a fifth specific embodiment of the present application. Referring to FIGS. 5, 6, and 7, a first contact surface 600 close to the pressure releasing device 30 and a second contact surface 700 away from the pressure releasing device 30 are provided between the first exhaust part 200 and the second installation part 301, and the second sealing member 500 is located on the first contact surface 600 and/or the second contact surface 700. The second sealing member 500 is located on the first contact surface 600 in FIG. 5, the second sealing member 500 is located on the second contact surface 700 in FIG. 6, and the second sealing member 500 is located on the first contact surface 600 and the second contact surface 700 in FIG. 7.

In this embodiment, the second sealing member 500 may be positioned at multiple locations, for example, the second sealing member 500 may be located on the first contact surface 600 or the second contact surface 700, and the second sealing member 500 may be simultaneously located on the first contact surface 600 and the second contact surface 700, the second sealing member 500 does not need to be located at a specific position during assembly, as long as the sealing reliability between the first exhaust part 200 and the second installation part 301 can be ensured, such that the installation difficulty of the second sealing member 500 is reduced, and the installation of the directional exhaust device is simplified.

In one embodiment, the second exhaust part 300 and the second installation part 301 are detachably connected, or the second exhaust part 300 and the second installation part 301 form an integrated structure.

In this embodiment, when the second installation part 301 or the second exhaust part 300 is damaged, the detachable connection between the second installation part 301 and the second exhaust part 300 allows the replacement of only the damaged part without replacing the entire directional exhaust device, which reduces maintenance costs. At the same time, the detachable connection between the second installation part 301 and the second exhaust part 300 enables the second installation part 301 and the second exhaust part 300 to be transported separately during transportation, thereby reducing transportation costs.

In this embodiment, with the integrated structure of the second installation part 301 and the second exhaust part 300, no installation is required between the second installation part 301 and the second exhaust part 300, thereby simplifying the installation of the directional exhaust device. At the same time, the integrated structure of the second installation part 301 and the second exhaust part 300 does not require sealing in the area where the second installation part 301 and the second exhaust part 300 are connected, thereby simplifying the structure of the directional exhaust device.

In one embodiment, the first exhaust part 200 and the second exhaust part 300 are bent relative to each other.

In this embodiment, the relative bending extent and the bending angle of the first exhaust part 200 and the second exhaust part 300 of the directional exhaust device may be adjusted according to different installation environments, so that the directional exhaust device can be applied to multiple different environments.

In one embodiment, the first exhaust part 200 is plugged with the pressure releasing device 30.

In this embodiment, the first exhaust part 200 is plugged with the pressure releasing device 30 so that the gas discharged from the battery 100 through the pressure releasing device 30 directly enters the first exhaust part 200, and the combustible gas will not enter the battery compartment to cause deflagration explosion. At the same time, the structure of the plugging connection between the first exhaust part 200 and the pressure releasing device 30 is relatively simple and easy to install.

In one embodiment, the energy storage prefabricated container is provided with a partitioning board, which is used to divide the energy storage prefabricated container into multiple compartments. An inner cavity of the partitioning board communicates with the external environment, and the partitioning board is served as the second exhaust part 300.

In this embodiment, the energy storage prefabricated container is divided into a plurality of compartments through the partitioning board, and the battery compartment is used to place the battery 100, in addition, an electrical appliance compartment, a water-cooling unit compartment, etc. are also provided so that each compartment cooperates with each other to realize the normal operation of the energy storage prefabricated container.

In this embodiment, the partitioning board can be used as the second exhaust part 300 and communicate with the external environment, so that the combustible gas generated by the battery 100 in case of thermal runaway can be discharged to the external environment through the second exhaust part 300. When the partitioning board is configured as the second exhaust part 300, the partitioning board can not only be used to separate each compartment, but also can be used to discharge the combustible gas generated during the thermal runaway of the battery 100, that is, the partitioning board is multifunctional, so that an additional second exhaust part 300 is not needed in the energy storage prefabricated container, which can simplify the structure of the energy storage prefabricated container and reduce the production cost of the energy storage prefabricated container.

In addition, an additional second exhaust part 300 in communication with the external environment may also be arranged in the energy storage prefabricated container, and the second exhaust part 300 is in communication with the first exhaust part 200. Here, the second exhaust part 300 may or may not be connected to the partitioning board, and the functions and structures of the two are relatively independent.

According to an embodiment of the present application, as shown in FIG. 2, the present application provides a directional exhaust device, which includes a first exhaust part 200 and a second exhaust part 300, the second exhaust part 300 may be a partitioning board, and the first exhaust part 200 communicates with the second exhaust part 300, the other end of the first exhaust part 200 is connected with the pressure releasing device 30, and the other end of the second exhaust part 300 is connected with the external environment. When thermal runaway occurs in the battery 100, the pressure releasing device 30 discharges the combustible gas generated by the battery 100 into the first exhaust part 200, and to the external environment through the first exhaust part 200 and the second exhaust part 300, thereby preventing the combustible gas from entering the battery compartment to cause deflagration and explosion, thus damages to the entire energy storage prefabricated container, and to cause great losses.

## Claims

1. A directional exhaust device, at least comprising: a first exhaust part (200) and a second exhaust part (300), wherein the first exhaust part (200) is configured for communicating with a pressure releasing device (30) of a battery (100), and the second exhaust part (300) communicates with the first exhaust part (200) and an external environment, so that a gas generated by the battery (100) is discharged through the pressure releasing device, the first exhaust part (200), and the second exhaust part (300);
**characterised in that**, the first exhaust part (200) and the second exhaust part (300) are bent relative to each other.

2. The directional exhaust device according to claim 1, wherein the first exhaust part (200) is provided with a first installation part (201) extending away from the first exhaust part (200) along a radial direction of the first exhaust part (200); and wherein the first installation part (201) is pressed against the second exhaust part (300).

3. The directional exhaust device according to claim 2, wherein the first installation part (201) and the second exhaust part (300) are in a seal connection through a first sealing member (400).

4. The directional exhaust device according to claim 3, wherein the first sealing member (400) is a soft rubber or a gasket.

5. The directional exhaust device according to any of claims 1 to 4, wherein the directional exhaust device further comprises a second installation part (301) connected to the second exhaust part (300); and
wherein the first exhaust part (200) is sleeved on an inner wall or an outer wall of the second installation part (301).

6. The directional exhaust device according to claim 5, wherein the first exhaust part (200) and the second installation part (301) are in a seal connection through a second sealing member (500).

7. The directional exhaust device according to claim 6, wherein a first contact surface (600) close to the pressure releasing device (30) and a second contact surface (700) away from the pressure releasing device (30) are provided between the first exhaust part (200) and the second installation part (301), and the second sealing member (500) is located on the first contact surface (600) and/or the second contact surface (700).

8. The directional exhaust device according to claim 5, wherein the second exhaust part (300) is detachably connected to the second installation part (301).

9. The directional exhaust device according to claim 5, wherein the second exhaust part (300) and the second installation part (301) form an integral structure.

10. The directional exhaust device according to any of claims 1 to 9, wherein the first exhaust part (200) is configured for a plugging connection with the pressure releasing device (30).

11. A battery (100), comprising: a battery cell (20), a pressure releasing device (30), and the directional exhaust device according to any of claims 1 to 10.

12. An energy storage prefabricated container, comprising: a battery compartment and the battery according to claim 11.

13. The energy storage prefabricated container according to claim 12, wherein a partitioning board is arranged in the energy storage prefabricated container, the partitioning board is configured for dividing the energy storage prefabricated container into a plurality of compartments, an inner cavity of the partitioning board communicates with the external environment, and the partitioning board is served as the second exhaust part (300).

## Patentansprüche

1. Gerichtete Abgasvorrichtung, mindestens umfassend: ein erstes Abgasteil (200) und ein zweites Abgasteil (300), wobei das erste Abgasteil (200) konfiguriert ist, um mit einer Druckentlastungsvorrichtung (30) einer Batterie (100) in Verbindung zu stehen, und das zweite Abgasteil (300) mit dem ersten Abgasteil (200) und einer äußeren Umgebung in Verbindung steht, so dass ein Gas, das von der Batterie (100) erzeugt wird, durch die Druckentlastungsvorrichtung, das erste Abgasteil (200) und das zweite Abgasteil (300) abgeleitet wird;
**dadurch gekennzeichnet, dass**,
das erste Abgasteil (200) und das zweite Abgasteil (300) relativ zueinander gebogen sind.

2. Gerichtete Abgasvorrichtung nach Anspruch 1, wobei das erste Abgasteil (200) mit einem ersten Installationsteil (201) versehen ist, das sich von dem ersten Abgasteil (200) entlang einer radialen Richtung des ersten Abgasteils (200) weg erstreckt; und wobei das erste Installationsteil (201) gegen das zweite Abgasteil (300) gedrückt wird.

3. Gerichtete Abgasvorrichtung nach Anspruch 2, wobei das erste Installationsteil (201) und das zweite Abgasteil (300) über ein erstes Dichtungselement (400) in einer Dichtungsverbindung stehen.

4. Gerichtete Abgasvorrichtung nach Anspruch 3, wobei das erste Dichtungselement (400) ein Weichgummi oder eine Dichtung ist.

5. Gerichtete Abgasvorrichtung nach einem der Ansprüche 1 bis 4, wobei die gerichtete Abgasvorrichtung ferner ein zweites Installationsteil (301) umfasst, das mit dem zweiten Abgasteil (300) verbunden ist; und
wobei das erste Abgasteil (200) auf eine Innenwand oder eine Außenwand des zweiten Installationsteils (301) aufgeschoben ist.

6. Gerichtete Abgasvorrichtung nach Anspruch 5, wobei das erste Abgasteil (200) und das zweite Installationsteil (301) über ein zweites Dichtungselement (500) in einer Dichtungsverbindung stehen.

7. Gerichtete Abgasvorrichtung nach Anspruch 6, wobei zwischen dem ersten Abgasteil (200) und dem zweiten Installationsteil (301) eine erste Kontaktoberfläche (600) nahe der Druckentlastungsvorrichtung (30) und eine zweite Kontaktoberfläche (700) entfernt von der Druckentlastungsvorrichtung (30) bereitgestellt sind und das zweite Dichtungselement (500) auf der ersten Kontaktoberfläche (600) und/oder der zweiten Kontaktoberfläche (700) angeordnet ist.

8. Gerichtete Abgasvorrichtung nach Anspruch 5, wobei das zweite Abgasteil (300) lösbar mit dem zweiten Installationsteil (301) verbunden ist.

9. Gerichtete Abgasvorrichtung nach Anspruch 5, wobei das zweite Abgasteil (300) und das zweite Installationsteil (301) eine integrale Struktur bilden.

10. Gerichtete Abgasvorrichtung nach einem der Ansprüche 1 bis 9, wobei das erste Abgasteil (200) für eine Steckverbindung mit der Druckentlastungsvorrichtung (30) konfiguriert ist.

11. Batterie (100), umfassend: eine Batteriezelle (20), eine Druckentlastungsvorrichtung (30), und die gerichtete Abgasvorrichtung nach einem der Ansprüche 1 bis 10.

12. Vorgefertigter Energiespeicherbehälter, umfassend: ein Batteriefach und die Batterie nach Anspruch 11.

13. Vorgefertigter Energiespeicherbehälter nach Anspruch 12, wobei in dem vorgefertigten Energiespeicherbehälter eine Trennwand angeordnet ist, die Trennwand konfiguriert ist, um den vorgefertigten Energiespeicherbehälter in eine Vielzahl von Fächern zu unterteilen, ein innerer Hohlraum der Trennwand mit der äußeren Umgebung in Verbindung steht und die Trennwand als zweites Abgasteil (300) dient.

## Revendications

1. Dispositif d'échappement directionnel, comprenant au moins : une première partie d'échappement (200) et une deuxième partie d'échappement (300), la première partie d'échappement (200) étant conçue pour communiquer avec un dispositif de libération de pression (30) d'une batterie (100), et la deuxième partie d'échappement (300) communiquant avec la première partie d'échappement (200) et un environnement externe, de telle sorte qu'un gaz généré par la batterie (100) soit évacué à travers le dispositif de libération de pression, la première partie d'échappement (200) et la deuxième partie d'échappement (300) ;
**caractérisé en ce que**,
la première partie d'échappement (200) et la deuxième partie d'échappement (300) sont coudées l'une par rapport à l'autre.

2. Dispositif d'échappement directionnel selon la revendication 1, dans lequel la première partie d'échappement (200) est pourvue d'une première partie d'installation (201) s'étendant à l'opposé de la première partie d'échappement (200) le long d'une direction radiale de la première partie d'échappement (200) ; et dans lequel la première partie d'installation (201) est pressée contre la deuxième partie d'échappement (300).

3. Dispositif d'échappement directionnel selon la revendication 2, dans lequel la première partie d'installation (201) et la deuxième partie d'échappement (300) sont en raccordement étanche à travers un premier élément d'étanchéité (400).

4. Dispositif d'échappement directionnel selon la revendication 3, dans lequel le premier élément d'étanchéité (400) est un caoutchouc souple ou un joint.

5. Dispositif d'échappement directionnel selon l'une quelconque des revendications 1 à 4, dans lequel le dispositif d'échappement directionnel comprend en outre une deuxième partie d'installation (301) raccordée à la deuxième partie d'échappement (300) ; et
dans lequel la première partie d'échappement (200) est manchonnée sur une paroi interne ou une paroi externe de la deuxième partie d'installation (301).

6. Dispositif d'échappement directionnel selon la revendication 5, dans lequel la première partie d'échappement (200) et la deuxième partie d'installation (301) sont en raccordement étanche à travers un deuxième élément d'étanchéité (500).

7. Dispositif d'échappement directionnel selon la revendication 6, dans lequel une première surface de contact (600) proche du dispositif de libération de pression (30) et une deuxième surface de contact (700) éloignée du dispositif de libération de pression (30) sont disposées entre la première partie d'échappement (200) et la deuxième partie d'installation (301), et le deuxième élément d'étanchéité (500) est placé sur la première surface de contact (600) et/ou la deuxième surface de contact (700).

8. Dispositif d'échappement directionnel selon la revendication 5, dans lequel la deuxième partie d'échappement (300) est raccordée de manière amovible à la deuxième partie d'installation (301).

9. Dispositif d'échappement directionnel selon la revendication 5, dans lequel la deuxième partie d'échappement (300) et la deuxième partie d'installation (301) forment une structure d'un seul tenant.

10. Dispositif d'échappement directionnel selon l'une quelconque des revendications 1 à 9, dans lequel la première partie d'échappement (200) est conçue pour un raccordement de bouchage avec le dispositif de libération de pression (30).

11. Batterie (100), comprenant : une cellule de batterie (20), un dispositif de libération de pression (30), et le dispositif d'échappement directionnel selon l'une quelconque des revendications 1 à 10.

12. Container préfabriqué de stockage d'énergie, comprenant : un compartiment de batterie et la batterie selon la revendication 11.

13. Container préfabriqué de stockage d'énergie selon la revendication 12, dans lequel un panneau de cloisonnement est agencé dans le container préfabriqué de stockage d'énergie, le panneau de cloisonnement est conçu pour diviser le container préfabriqué de stockage d'énergie en une pluralité de compartiments, une cavité interne du panneau de cloisonnement communique avec l'environnement externe, et le panneau de cloisonnement est utilisé en tant que deuxième partie d'échappement (300).
